# EUROPEAN PATENT SPECIFICATION

(11) **EP 3 502 460 B1**
(45) Date of publication and mention of the grant of the patent: **13.03.2024**
(21) Application number: 17208342.0
(22) Date of filing: 19.12.2017
(51) Int. Cl.: F02M 57/00, F02M 61/16, F02M 55/02, F02M 55/00, F16B 33/00, F16B 1/00, F16L 15/00

(54) **FASTENING CONNECTOR FOR SECURING TWO COMPONENTS TOGETHER**
BEFESTIGUNGSVERBINDER ZUR VERBINDUNG ZWEIER BAUTEILE MITEINANDER
CONNECTEUR DE FIXATION SERVANT À FIXER DEUX COMPOSANTS ENTRE EUX

(43) Date of publication of application: 26.06.2019
(73) Proprietor: Vitesco Technologies GmbH, 93055 Regensburg (DE)
(72) Inventor: Puccini, Andrea, 56028 San Miniato (PI) (IT)
(74) Representative: Vitesco Technologies

(56) References cited:
- EP-A1- 2 626 546
- GB-A- 2 503 561
- US-A- 4 009 893
- US-A- 4 154 466
- US-A- 4 928 999
- US-A1- 2007 102 927
- US-A1- 2013 220 271
- US-A1- 2017 342 950

## Description

Method of securing two components together The present disclosure relates to a method of securing two components together. The disclosure relates particularly but not exclusively to a fastening connection, in particular a screw connection, for securing a component to a fuel rail of a fuel injection system for an internal combustion engine in a fluid tight manner.

In some arrangements, when a metal to metal fluid seal is required between two components, a screw connection is simply tightened down to a torque which may or may not be specified. Typically, one of the components has a projection relative to the other component which bites into the surface of the other surface to form a fluid tight seal.

Connectors for securing two components together reliably, in particular, for producing a reliable fluid-tight seal between the two components, are desirable. A method of securing two components together by means of a screw thread is described in US4154466A

The present disclosure relates to a method of securing two components together by means of a screw thread. The method comprises a first component having a male screw thread adapted to be screwed into a female screw thread on a second component, each component having a frusto-conical surface. A difference in the angle of the frusto-conical surface of the first component and the frusto-conical surface of the second component is less than 30° so that when the first component is screwed to the second component with a predetermined minimum torque the frusto-conical surfaces are brought into contact over a predetermined area of the frusto-conical surfaces to form a fluid tight seal between the first component and the second component.

A screw or threaded connection between the male or outer screw thread of the first component and the female or inner screw thread of the second component is provided that causes a metal-to-metal seal to be formed between the frusto-conical surfaces of the two components. The frusto-conical surfaces may be positioned at the distal end of the first component and second component.

The frusto-conical surface of the first component is defined by an angle α₁ and the frusto-conical surface of the second component is defined by an angle α₂. Consequently, the angle formed between the frusto-conical surface of the first component and the axis of rotation of the screw thread is ½ α₁ and the angle formed between the frusto-conical surface of the second component and the axis of rotation of the screw thread is ½ α₂. The difference between the frusto-conical angles, |α₁ - α₂|, is less than 30° and consequently the difference between the frusto-conical angles relative to the axis of rotation of the thread, |½ α₁ - ½ α₂|, is less than 15°.

The difference in the angle of the frusto-conical surfaces of the two components is less than 30°. This fastening connector enables a metal-to-metal seal to be provided that also allows the relative angular orientation about the axis of rotation of the screw thread between the two components to be adjusted by further screwing the second component into the first component after the metal-to-metal seal has been formed at the predetermined minimum torque and without exceeding a predetermined maximum torque and/or without reducing the effectiveness of the fluid-tight seal. This may be useful for positioning the first component in a desired orientation, for example, so that the first component meets predetermined clearance requirements with respect to further components and/or so that an indicia or marker on the first component have a particular absolute orientation with respect to a predetermined external point.

In conventional metal-to-metal seals, the difference in the angle of the frusto-conical surfaces of two components, which are to be fastened together by a threaded connection, is at least 30° in order that the metal of at least one of the components is deformed and a metal-to metal seal is produced. Due to the threaded connection, a change in angle causing the first component to move further into the second component causes a large increase in torque applied to the joint due to the larger difference in angle of the frusto-conical surfaces. Therefore, an angular reorientation after achieving the fluid-tight seal is likely to lead to damage to the seal if the difference in the angle of the frusto-conical surfaces is 30° or more. According to the invention, the difference between the angle of the frusto-conical surface of the first component and the angle of the frusto-conical surface of the second component is reduced to less than 30°.

The angle of the surfaces and the difference between the angle of the surfaces is such that the torque required to turn the first component by a further 180° or a further 360° does not exceed a predetermined maximum torque. This allows the first component to have a particular desired orientation with respect to the second component, particularly if the orientation of the second component is fixed.

The predetermined minimum torque and the predetermined maximum torque typically depend on the diameter of the thread. For example, for a M10 thread, the predetermined minimum torque may be around 30 to 35 Nm and the predetermined maximum torque may be 50Nm. The pitch of the thread of the screw connection may be selected such that a 180° or 360° range of reorientation results in a downward movement of the first component onto the second component and an increase in the torque which has to be applied that is less than the difference between the minimum and maximum predetermined torque, for example less than 20 Nm or less than 15 Nm.

A smaller difference between the angles of the frusto-conical surfaces of the first and second component may allow a greater range of repositioning angles before the values of the predetermined maximum torque is reached. In some embodiments, the difference between the angle of the frusto-conical surface of the first component and the angle of the frusto-conical surface of the second component is 15° or less, preferably 2° or less.

The frusto-conical surface of the first component may have an angles in the range of 20° to 45°, for example. The frusto-conical surface of the second component may have an angle in the range of 20° to 45°, for example. Consequently, the angle of the frusto-conical surface of the first component with respect to the axis of rotation of the screw thread may lie in the range of 10° to 22.5°, for example. The angle of the frusto-conical surface of the second component with respect to the axis of rotation of the screw thread may lie in the range of 10° to 22.5°, for example.

The first component carries an indicia, the first component being rotatable after the predetermined minimum torque is reached to position the indicia in a predetermined location. A further component is secured to the first component and the further component carries the indicia.

In some embodiments, the first component or the further component is a sensor adapted to provide an indication of a characteristic of the second component and/or its contents. In one particular example, the sensor may be a pressure and/or temperature sensor and the second component may contain a fluid whose pressure and/or temperature is to be measured. The second component may be a fuel rail, for example, in which case the fluid is fuel.

In another embodiment, the first component has a non-uniform profile about the axis of rotation of the screw thread, the first component being rotatable after the predetermined minimum torque is reached to position the non-uniform profile in a predetermined location. This allows predetermined clearances around the first component and the fastening connection to be fulfilled whilst still reliably providing a fluid tight seal The non-uniform profile may include a connector for providing a connection to a further component. For example, the non-uniform profile may include a latch or hook.

In another example, not part of the invention, the second component comprises a common rail of a fuel injection system for an internal combustion engine. A plurality of said fastening connections may be provided in spaced relationship along the common rail. The position of the common rail is typically fixed, and the first component is fastened to the common rail by the fastening connector according to one of the embodiments described herein. The angular orientation of the first component may be adjusted, after applying the minimum predetermined torque to achieve a fluid-tight seal between the first component and the common rail, by further screwing the first component into the screw thread on the second component of common rail.

In yet a further embodiment, a resilient sealing ring is positioned between the first and second components to form an additional fluid tight seal. Preferably, the seal is located between a shoulder on the first component and a cylindrical section of the second component to enable the seal to be maintained over a predetermined amount of movement of the first component in the axial direction. The axial direction may be the axis of rotation of the screw thread.

For operational reasons, the torque imparted on the screw connection, when the components are assembled and the screw tightened, is kept within predetermined maximum and minimum limits. A further operational requirement may be that the indicia, when in an installed condition, should be in a predetermined orientation so that it can be read either visually by a person or be automatically scanned by an indicia reader.

In some embodiments, the indicia comprise data readable visually or by an automatic scanner. By positioning the indicia at a predetermined desirable position, this may assist reading the data efficiently. This may be useful for part tracing purposes. In some embodiments, the indicia comprise a physical element to which another component is securable and/or a physical element for locating another component relative to the fastening connector. For example, some sensors, such as flow rate sensors, may operate correctly only at specific orientations relative to the second component, for example with respect to the direction of flow of the fluid at that point in the second component. Thus, the method described herein allows the sensor to be positioned with the correct relative orientation to the second component and direction of flow of the fluid whilst maintaining a fluid-tight seal over a range of values of torque lying between the predetermined minimum and maximum values.

A common rail assembly of a fuel injection system for an internal combustion engine, including a fastening connector for fastening a first component to the common rail is an example, not part of the claimed invention. The second component is a common fuel rail of the fuel injection system. The first component may be a sensor, for example a fuel pressure and/or temperature sensor. In other examples, not claimed, a plurality of said fastening connectors are provided in spaced relationship along the common fuel rail.

An embodiment of the present disclosure will now be described by way of example with reference to the accompanying drawings, in which:-
- Figure 1: shows a schematic side view of a component secured to a common rail of a fuel injection system for an internal combustion engine by a screw connection,
- Figure 2: shows a schematic side view as shown in Figure 1 in which the screw connection is rotated by 180° in a tightening direction,
- Figure 3: shows an isometric view of Figure 1,
- Figure 4: shows an isometric view of Figure 2, and
- Figure 5: shows a detail of the screw connection securing the two components together.

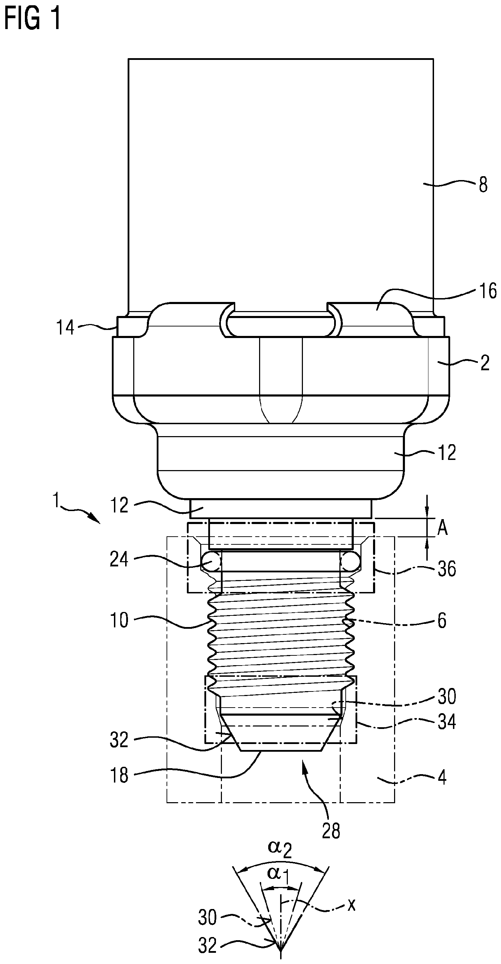

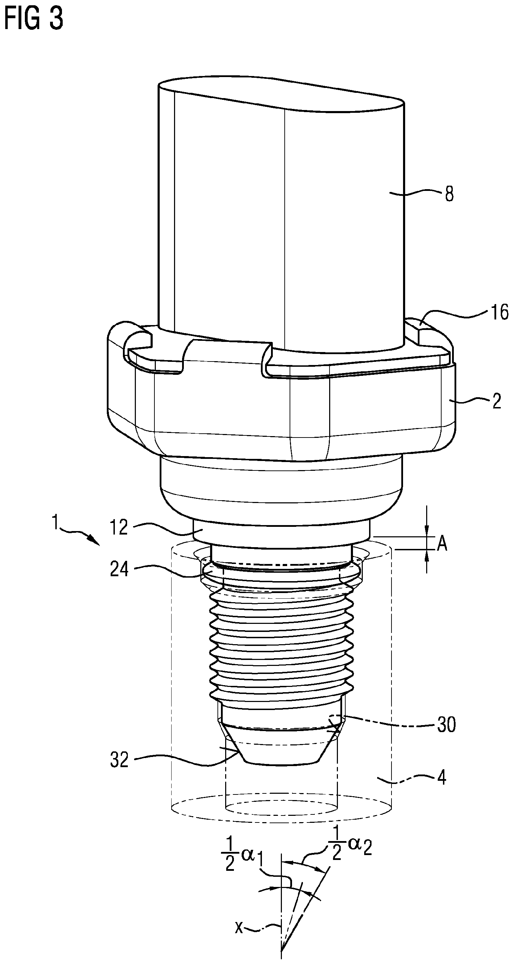

The drawings illustrate a fastening connector or connection 1 for securing two components 2, 4 together by means of a screw thread comprising a first component 2 having a male screw thread adapted to be screwed into a female screw thread on a second component 4. Both the first component 2 and the second component 4 have a frusto-conical surface 30, 32 having an angle, α₁, α₂, respectively as illustrated in Figure 1. As is illustrated in Figure 3, the frusto-conical surface 30 of the first component 2 relative to the axis of rotation, x, of the screw thread is α₁/2 and the frusto-conical surface 32 of the second component 4 relative to the axis of rotation, x, of the screw thread is α₂/2. A difference in the angle of the frusto-conical surface 30 of the first component 2 and the frusto-conical surface 32 of the second component, |α₁ - α₂|, is less than 30° so that when the first component 2 is screwed to the second component 4 with a predetermined minimum torque the frusto-conical surfaces 30, 32 are brought into contact over a predetermined area of the frusto-conical surfaces 30, 32 to form a fluid tight seal 34 between the first component 2 and the second component 4. In this illustrated example, the second component 4 is a common rail of a fuel injection system for an internal combustion system and the first component 2 includes a connector 12 and sensor 8.

Referring to the drawings there is shown part of the body of the common rail 4 of the fuel injection system for an internal combustion engine, to which common rail 4 the component 2 comprising a sensor 8 is secured by means of a connector 12. The sensor 8 is adapted to provide an indication of a characteristic of the fuel rail and/or its contents, such as temperature or fluid pressure. The connector 12 has a male or outer screw thread 6 which is screwed into a female or inner screw thread 10 in the common rail 4 to provide a screw fastening. The screw thread 10 is part of a passage in the wall of the common rail 4 through which the sensor 8 can communicate with the interior of the common rail 4. The connector 12 has a hexagonal head by which the component 1 can be screwed into the common rail 4 by means of a spanner or similar tool.

The sensor 8 has a shoulder 14 which may comprise a single annular shoulder or may comprise, as shown, a plurality of shoulder elements disposed about the periphery of the sensor 8. The sensor 8 is secured to the connector 12 by means of a plurality of tabs 16 formed integrally with the fastening connector 12 which are bent over to securely engage the shoulder 14 on the sensor 8 so that the sensor 8 is immovably secured relative to the connector 12. On its outer surface the sensor 8 carries indicia 20 which, in this particular example, comprises a data carrier.

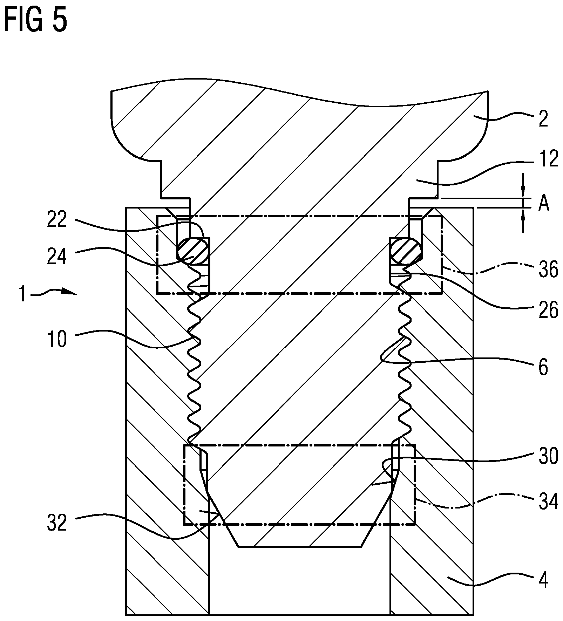

Referring now additionally to Figure 5, the connector 12 has a peripheral shoulder 22 which supports a sealing ring 24 which engages both with a cylindrical section 26 of the passage in the fuel rail 4 and the shoulder 22, and hence the connector 12, to provide a further fluid tight seal 36 between the connector 12 and the common rail 4.

At its leading end, the screw thread 6 of the connector 12 has a conical leading section 28 having a frusto-conical section 30 which engages with a frusto-conical surface 32 in the common rail 4. The angle formed between the angle α₁/2 of the frusto-conical surface 30 of the fastening connector 12 relative to the axis of rotation, x, of the screw thread and the angle α₂ /2 of the frusto-conical surface 32 of the fuel rail relative to the said axis x is less than 30° preferably less than 15° or more preferably less than 2°. In other words, the difference between the angle of the frusto-conical surface 30 of the fastening connector 12 and the angle of the frusto-conical surface 32 of the fuel rail 4, |α₁ - α₂|, is less than 30°, preferably less than 15° or more preferably less than 2°.

The precise angle and the difference between the angles α₁ and α₂ of the two frusto-conical surfaces 30, 32 selected is dependent upon a number of characteristics, such as the relative hardness between the material of the connector 12 and the body of the fuel rail 4 itself. For example, the connector 12 may be made of a harder material than that of the fuel rail body such that the material of the fuel rail body deforms as the connector 12 is screwed into the fuel rail body to form a metal-to metal seal 34. In some embodiments, the connector 12, in particular, the portion in which the outer screw thread is formed, is made of a martensitic steel, for example 17-4 PH, and the fuel rail 4, in particular the portion in which the inner screw thread is formed, is made of stainless steel for example 1.4301, which is softer material than the martensitic steel.

The two frusto-conical surfaces 30, 32 therefore engage as the connector 2 is screwed into the fuel rail 4 until the minimum torque is reached which ensures a metal to metal sealing contact over an area of the mating frusto-conical surfaces to prevent fluid under high pressure in the fuel rail 4 from leaking past the screw connection 6. At the same time, the said minimum torque is arranged to ensure that a sufficient retentive force is generated between the two components 2, 4 so that they remain securely fastened together in use. The sealing ring or O-ring 24 serves as an additional seal 36 to prevent leakage of any fluid which does leak past the seal formed between the frusto-conical surfaces 30, 32.

Figures 1 and 3 show the connection in which the first component 2 is screwed into the fuel rail 4 until the minimum torque is reached at which point the two components 2, 4 are held firmly together and the frusto-conical surfaces 30, 32 provide a metal to metal contact seal 34. It can be seen that the resilient sealing ring 24 is towards the outer end of the cylindrical section 26 of the passage in the fuel rail.

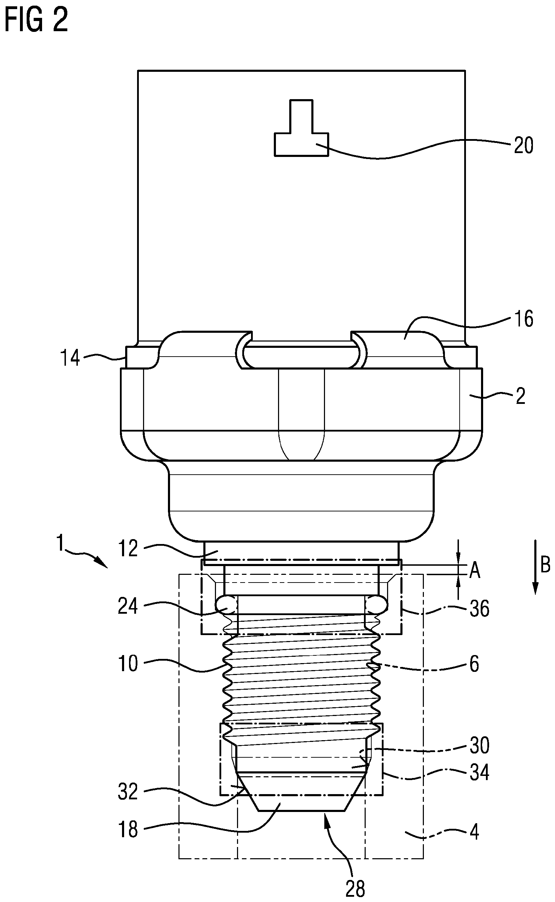

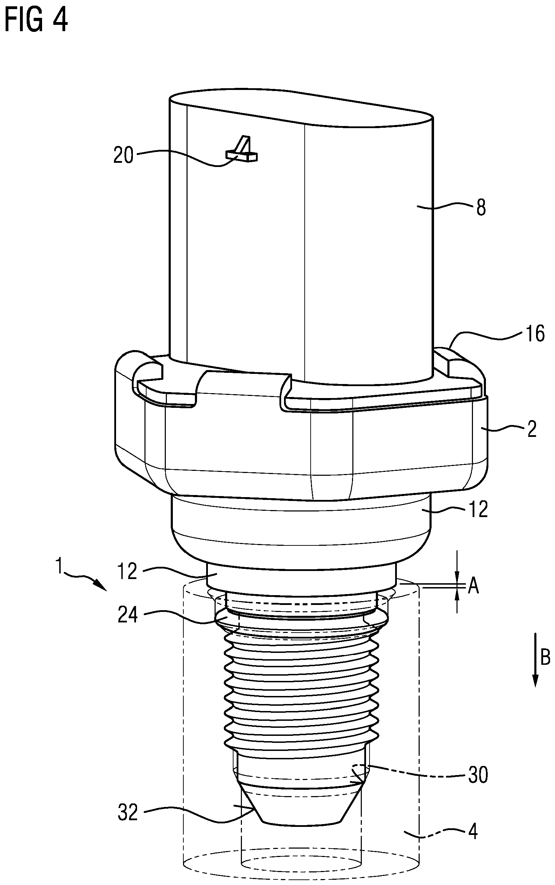

Figures 2 and 4 show the position where the connector 12 is screwed in by a further 180° from the position illustrated in Figures 1 and 3 which causes the connector 12 to move in the direction illustrated by arrow B, thus reducing the gap A between the two components, to bring the indicia 20 into a desired position. At this position, the torque applied to the metal-to-metal seal 34 is less than the predetermined maximum value due to the difference in the angle of the frusto-conical surfaces 30, 32 being less than 30°. In this arrangement, it can be seen that the sealing ring 20 is located further down the cylindrical section 26 but is still in a position to provide the necessary backup seal function.

As shown more clearly in Figure 5, even with the fastening connector 2 screwed in with an additional turn of 360° after the minimum torque is reached, a gap A still exists between the outer body of the fastening connector 2 and the common rail 4 to ensure that all the applied torque is transmitted to the frusto-conical surfaces 30 and 32.

In the present disclosure the screw connector 12 is tightened down to the minimum torque level specified and it is then possible to continue tightening the connection, by up to 360° if necessary, to align the indicia 20 correctly, which, because of the small included angle of the frusto-conical surfaces 30 and 32, means that the increase in torque to correctly align the indicia 20 still lies within the predetermined maximum and minimum torque criteria. In this embodiment, the predetermined minimum torque is 30 Nm (Newton metre) and the predetermined maximum torque is 50 Nm.

The required angle α₁/2, α₂/2 of the frusto-conical surfaces 30, 32 relative to the axis of rotation x is related to the pitch of the thread 6, 10, the coarser the thread pitch the smaller the angle has to be to accommodate the extra linear movement of the connector 12 caused by the coarser thread pitch without excessive torque greater than the predetermined maximum being generated. In the present embodiment, the thread has a pitch of 1 mm so that the extra turn of 360° generates a linear downward movement, indicated by the arrow B, of the connector 12 towards the fuel rail 4 of 1 mm. It has been found that typically in the majority of occasions, rotating the connector 12 by 180° maximum is all that is usually required.

Although described as an indicia 20 providing data which may be read visually or by an automatic scanner, it will be understood that the term is broad enough to indicate a physical characteristic which may, for example, enable a further component to be automatically connected to the fastening connector 2 and/or for locating another component relative to the connector 12.

To facilitate this, in an example not part of the invention which is defined in the claims, the indicia 20 or physical characteristic may be located on or in the connector 12 itself or on a further component, such as the sensor 8, coupled to the connector 12. Furthermore, the connector 12 or first component 2 may have a non-uniform profile about the axis of the connector 12 or first component 2, respectively, in which case the non-uniform profile may be the indicia 20 and form the criteria by which the connector 12 or first component 2 may be located in a desired position.

## Claims

1. Method of securing two components together by means of a screw thread, comprising a first component (2) having a male screw thread adapted to be screwed into a female screw thread on a second component (4), each component having a frusto-conical surface (30, 32) having an angle *∝*1, *∝*2, respectively, wherein a difference in the angle *∝*1, *∝*2 of the frusto-conical surface (30) of the first component (2) and the frusto-conical surface (32) of the second component is between 0° and 29°, **characterized in that** the frusto-conical surfaces (30,32) are in contact over a predetermined area of the frusto-conical surfaces (30,32) after being screwed with a predetermined minimum torque forming a fluid thight seal between the first component (2) and the second component (4), wherein the first component (2) carries an indicia (20), and wherein the indicia (20) on the first component (2) being positioned in a predetermined location after being rotated with a torque between the predetermined minimum torque and a predetermined maximum torque, wherein the first component (2) is rotatable after the predetermined minimum torque is reached such that the torque required to turn the first component (2) by at least a further 180° or preferably a further 360° does not exceed a predetermined maximum torque, **characterized in that** a further component (8) is secured to the first component, the further component (8) carrying the indicia (20).

2. Method according to claim 1, wherein the difference in the angle of the frusto-conical surface (30) of the first component (2) and frusto-conical surface (32) of the second component is less than 15°, preferably less than 2°.

3. Method according to any one of the preceding claims, wherein the first component (2) has a non-uniform profile about the axis of rotation of the screw thread, the first component (2) being rotatable after the predetermined minimum torque is reached to position the non-uniform profile in a predetermined location.

4. Method according to any of the preceding claims, wherein the further component (8) is a sensor (8) adapted to provide an indication of a characteristic of the second component (4) and/or its contents.

5. Method according to any one of the preceding claims, further comprising a resilient sealing ring (24) is positioned between the first component (2) and the second components (4) to form an additional fluid tight seal.

6. Method according to claim 5, wherein the seal (24) is located between a shoulder (22) on the first component (2) and a cylindrical section (26) of the second component (4) to enable the seal to be maintained fluid tight over a predetermined amount of movement of the first component (2) in an axial direction.

7. Method according to any one of claims 1 to 6, wherein the indicia (20) comprise data readable visually or by an automatic scanner.

8. Method according to any one claims 1 to 7, wherein the indicia (20) comprises a physical element to which another component is securable and/or for locating another component relative to the fastening connector.

## Patentansprüche

1. Verfahren zum Befestigen zweier Komponenten aneinander mittels eines Schraubgewindes, umfassend eine erste Komponente (2) mit einem Außengewinde, das dazu ausgeführt ist, in ein Innengewinde an einer zweiten Komponente (4) eingeschraubt zu werden, wobei jede Komponente eine kegelstumpfförmige Fläche (30, 32) mit einem Winkel α1 bzw. α2 hat, wobei eine Differenz bei dem Winkel α1, α2 der kegelstumpfförmigen Fläche (30) der ersten Komponente (2) und der kegelstumpfförmigen Fläche (32) der zweiten Komponente zwischen 0° und 29° beträgt, **dadurch gekennzeichnet, dass** die kegelstumpfförmigen Flächen (30, 32) nach dem Schrauben mit einem vorbestimmten minimalen Drehmoment über einen vorbestimmten Bereich der kegelstumpfförmigen Flächen (30, 32) in Kontakt sind und eine fluiddichte Abdichtung zwischen der ersten Komponente (2) und der zweiten Komponente (4) bilden, wobei die erste Komponente (2) eine Markierung (20) trägt und wobei die Markierung (20) an der ersten Komponente (2) nach einer Drehung mit einem Drehmoment zwischen dem vorbestimmten minimalen Drehmoment und einem vorbestimmten maximalen Drehmoment an einer vorbestimmten Stelle positioniert ist, wobei die erste Komponente (2) nach dem Erreichen des vorbestimmten minimalen Drehmoments drehbar ist, so dass das zum Drehen der ersten Komponente (2) um mindestens weitere 180° oder vorzugsweise weitere 360° erforderliche Drehmoment ein vorbestimmtes maximales Drehmoment nicht überschreitet, **dadurch gekennzeichnet, dass** eine weitere Komponente (8) an der ersten Komponente befestigt wird, wobei die weitere Komponente (8) die Markierung (20) trägt.

2. Verfahren nach Anspruch 1, wobei die Differenz bei dem Winkel der kegelstumpfförmigen Fläche (30) der ersten Komponente (2) und der kegelstumpfförmigen Fläche (32) der zweiten Komponente kleiner als 15°, vorzugsweise kleiner als 2° ist.

3. Verfahren nach einem der vorhergehenden Ansprüche, wobei die erste Komponente (2) ein nicht einheitliches Profil um die Rotationsachse des Schraubgewindes hat, wobei die erste Komponente (2) nach dem Erreichen des vorbestimmten minimalen Drehmoments drehbar ist, um das nicht einheitliche Profil an einer vorbestimmten Stelle zu positionieren.

4. Verfahren nach einem der vorhergehenden Ansprüche, wobei die weitere Komponente (8) ein Sensor (8) ist, der dazu ausgeführt ist, eine Angabe einer Charakteristik der zweiten Komponente (4) und/oder ihres Inhalts zu liefern.

5. Verfahren nach einem der vorhergehenden Ansprüche, ferner umfassend einen federnden Dichtring (24), der zwischen der ersten Komponente (2) und den zweiten Komponenten (4) positioniert ist, um eine zusätzliche fluiddichte Abdichtung zu bilden.

6. Verfahren nach Anspruch 5, wobei die Dichtung (24) zwischen einer Schulter (22) an der ersten Komponente (2) und einem zylindrischen Abschnitt (26) der zweiten Komponente (4), damit die Dichtung über ein vorbestimmtes Ausmaß an Bewegung der ersten Komponente (2) in einer axialen Richtung fluiddicht gehalten werden kann.

7. Verfahren nach einem der Ansprüche 1 bis 6, wobei die Markierungen (20) Daten umfassen, die visuell oder mittels eines automatischen Scanners lesbar sind.

8. Verfahren nach einem der Ansprüche 1 bis 7, wobei die Markierung (20) ein physisches Element umfasst, an dem eine weitere Komponente befestigt werden kann, und/oder um eine weitere Komponente bezüglich des Befestigungsverbinders anzuordnen.

## Revendications

1. Procédé de fixation de deux composants ensemble au moyen d'un filetage de vis, comprenant un premier composant (2) ayant un filetage de vis mâle adapté pour être vissé dans un filetage de vis femelle sur un second composant (4), chaque composant ayant une surface tronconique (30, 32) ayant respectivement un angle α1, α2, une différence dans l'angle α1, α2 de la surface tronconique (30) du premier composant (2) et de la surface tronconique (32) du second composant étant comprise entre 0° et 29°, **caractérisé en ce que** les surfaces tronconiques (30, 32) sont en contact sur une zone prédéterminée des surfaces tronconiques (30, 32) après avoir été vissées avec un couple minimal prédéterminé formant un joint étanche aux fluides entre le premier composant (2) et le second composant (4), le premier composant (2) portant une marque (20), et la marque (20) sur le premier composant (2) étant positionnée à un endroit prédéterminé après avoir été tournée avec un couple entre le couple minimum prédéterminé et un couple maximum prédéterminé, le premier composant (2) pouvant être tourné après que le couple minimum prédéterminé est atteint de telle sorte que le couple nécessaire pour tourner le premier composant (2) d'au moins 180° supplémentaires ou de préférence de 360° supplémentaires ne dépasse pas un couple maximum prédéterminé, **caractérisé en ce qu'**un composant supplémentaire (8) est fixé au premier composant, le composant supplémentaire (8) portant la marque (20).

2. Procédé selon la revendication 1, la différence d'angle entre la surface tronconique (30) du premier composant (2) et la surface tronconique (32) du second composant étant inférieure à 15°, de préférence inférieure à 2°.

3. Procédé selon l'une quelconque des revendications précédentes, le premier composant (2) ayant un profil non uniforme autour de l'axe de rotation du filetage de vis, le premier composant (2) pouvant être mis en rotation une fois le couple minimal prédéterminé atteint pour positionner le profil non uniforme à un endroit prédéterminé.

4. Procédé selon l'une quelconque des revendications précédentes, le composant supplémentaire (8) étant un capteur (8) adapté pour fournir une indication sur une caractéristique du second composant (4) et/ou de son contenu.

5. Procédé selon l'une quelconque des revendications précédentes, comprenant en outre un anneau d'étanchéité résilient (24) qui est positionné entre le premier composant (2) et les seconds composants (4) pour former un joint étanche au fluide supplémentaire.

6. Procédé selon la revendication 5, le joint (24) étant situé entre un épaulement (22) sur le premier composant (2) et une section cylindrique (26) du second composant (4) pour permettre au joint d'être maintenu étanche au fluide sur une quantité prédéterminée de mouvement du premier composant (2) dans une direction axiale.

7. Procédé selon l'une quelconque des revendications 1 à 6, les marques (20) comprenant des données lisibles visuellement ou par un scanner automatique.

8. Procédé selon l'une quelconque des revendications 1 à 7, la marque (20) comprenant un élément physique auquel un autre composant peut être fixé et/ou pour localiser un autre composant par rapport au connecteur de fixation.
